# EUROPEAN PATENT APPLICATION

(11) **EP 4 472 065 A1**
(43) Date of publication of application: **04.12.2024**
(21) Application number: 24178649.0
(22) Date of filing: 29.05.2024
(51) Int. Cl.: H02S 20/10, H02S 20/30, A01G 9/24

(54) **FIELD OF BIFACIAL PHOTOVOLTAIC SOLAR PANELS**

(30) Priority: 29.05.2023 IT 202300010878; 28.05.2024 IT 202400012169
(71) Applicant: Tecna Energy Srl, 35013 Cittadella (PD) (IT)
(72) Inventor: The designation of the inventor has not yet been filed
(74) Representative: Perrotta, Aldo

(57) **Abstract**

Field of bifacial photovoltaic solar panels comprising rows of bifacial photovoltaic panels arranged in rows arranged in a NORTH SOUTH direction so that the bifacial photovoltaic panels are each equipped with two surfaces for collecting solar radiation, these surfaces belonging to an ideal plane perpendicular to the almost parallel ground to the North South meridian axis so that one surface of the double-sided photovoltaic panel looks almost to the east at the rising of the sun and the other surface of the double-sided photovoltaic panel opposite to the first, looks almost to the west at the setting of the sun characterized by the fact that each row of bifacial photovoltaic panels includes poles fixed in the ground and panels arranged between one pole and another, each bifacial photovoltaic panel is attached on one side to a pole and on the other side to the next pole with lateral constraints 5 that allow rotation and that the axis passing through the lateral constraints 5 is arranged at a certain distance above the axis passing through the center of gravity 4 of the panel.

## Description

### Technical Field of the invention

The present invention concerns fields of bifacial photovoltaic solar panels whose surfaces that capture the sun's rays belong to an ideal plane perpendicular to the ground and are therefore fixed, hung laterally from support poles driven into the ground and free to rotate on an axis positioned at a certain distance from the center of gravity to reduce wind resistance.

### State of art

Over the last few years, the development of photovoltaic solar panels has led to ever-increasing returns in terms of electricity produced per unit of collection surface area. To improve the performance of photovoltaic panels, bifacial photovoltaic solar panels have also been created, i.e. having two surfaces for collecting and transforming solar energy into electricity. These double-sided photovoltaic solar panels are also used in agrivoltaics systems, positioned vertically like rows of grapes. This, in addition to allowing the soil between the rows to be easily cultivated, guarantees excellent energy yield from the double-sided photovoltaic panels, in fact, given their vertical position, they are irradiated from the east in the morning and from the west in the afternoon. However, vertical bifacial agrovoltaic systems act as a barrier to the wind and the modules are subject to internal tensions which compromise their performance over time in addition to the fact that the steel structures that support them must withstand strong thrusts and are therefore very expensive. To reduce the above-mentioned problems, support systems for photovoltaic panels have been introduced which allow them to tilt under the pressure of the wind so as to have more economical structures. An example of such a solution is described in US2011005583A1.

This solution, however, has disadvantages: in the specific case described in US2011005583A1, since the panel is suspended on the upper side, the rotation axis has a distance from the center of gravity equal to half the side of the photovoltaic panel. This causes a resistant couple given by the weight of the photovoltaic panel which in fact creates further stress on the panel and the support structures. In addition to this, under the action of the wind the photovoltaic panel oscillates with a certain frequency and period T and since said photovoltaic panel is capable of capturing energy exclusively from one side, during its oscillation it goes into the shade for half the period, especially around the zentih when solar radiation is greatest. Therefore, for these two main reasons this solution has not become widespread.

### Summary of the invention

The main objective of the present invention is to obtain the lowest possible value of the system cost/energy produced ratio in agrivoltaics systems or in any case in systems installed on the ground.

To achieve this aim, a field of bifacial photovoltaic solar panels was created equipped with two surfaces for collecting solar radiation, these surfaces belonging to an ideal plane perpendicular to the ground parallel or almost parallel to the North South meridian axis so that a surface of the panel double-sided solar photovoltaic panel looks east or almost east as the sun rises and the other surface of the double-sided solar photovoltaic panel opposite to the first, looks west or almost west as the sun sets. These double-sided solar panels are anchored to the sides on poles fixed to the ground typical of vineyards, preferably but not exclusively in vibrated and reinforced pre-stressed concrete produced in series at a very low cost or in iron or wood. The anchoring points of said solar panels to the poles allow their free rotation and are above the barycentric axis of each solar panel, so that under the action of the wind the wind-resistant torque generated by the weight of the panel photovoltaic system is minimal, during the design phase the minimum distance is determined between the axis that passes through the "hinge" anchors of the panel and the barycentric axis of the double-sided photovoltaic panel, so as to avoid efforts that generate bending tensions in the modules and poles fixed due to the wind. In fact, under the action of the wind, the double-sided panel rotates easily without effort, placing itself parallel to the direction of the wind. Furthermore, in case of wind, the double-sided photovoltaic panel allows it to capture even more energy during its oscillations in proximity to the zenith, since it certainly exposes one face of the panel to the sun when it oscillates in rotation on the axis that passes through the lateral constraints 5, this would not happen with the vertical double-sided panel on rigid structures nor with the solution proposed in the solution described in US2011005583A1 given that not being double-faced, at most it captures the sun's radiation with one face only during its oscillations with the sun in positions close to the zenith.

The main purpose of the present invention is to create a field of bifacial photovoltaic solar panels comprising rows of bifacial photovoltaic panels arranged in rows arranged in a NORTH SOUTH direction so that the bifacial photovoltaic panels each equipped with two surfaces for collecting solar radiation, these surfaces belonging to an ideal plane perpendicular to the ground almost parallel to the North South meridian axis so that one surface of the double-sided photovoltaic panel looks almost to the east at the sunrise and the other surface of the double-sided photovoltaic panel opposite to the first, looks almost to the west at the sunset characterized by the fact that each row of double-sided photovoltaic panels includes poles driven into the ground and panels arranged between one pole and another, that each double-sided photovoltaic panel is attached on one side to a pole and on the other side to the next pole with lateral constraints that allow rotation and that the axis passing through the lateral constraints is arranged at a certain distance above the axis passing through the center of gravity of the panel.

Another characteristic is given by the fact that the distance between the axis passing through the lateral constraints and the axis passing through the center of gravity of the panel is between 5 cm and 60 cm.

Another characteristic is given by the fact that the driven piles are the typical ones used for traditional vineyards: for example made of vibrated and reinforced pre-stressed concrete, iron, wood.

Another characteristic is given by the fact that each row of the field of bifacial photovoltaic solar panels has a device consisting of a motorized rotating shaft placed under the lower side of the bifacial photovoltaic solar panels, which said motorized shaft is equipped with rods arranged perpendicular to it, which each rod is arranged under each double-sided photovoltaic solar panel and that each rod is equipped with an extension made of elastic material.

Another characteristic is given by the fact that the direction of rotation of the shaft is counterclockwise before the zenith in the morning and clockwise after the zenith in the afternoon so that the double-sided photovoltaic panel increases the collection of solar energy.

Another characteristic is given by the fact that the lateral constraint is made with pins "P" integral with the support poles of the photovoltaic modules, that the double-sided photovoltaic panels are connected to the support poles by means of rotation cranks "E", that the rotation cranks "E " are fixed to the sides of each double-sided photovoltaic panel at a certain distance above the axis passing through the center of gravity "G" of the panel, that the rotation cranks "E" are mounted to rotate around the pins "P" integral with the support poles, that each row of double-sided photovoltaic panels also has one or more motorized jacks "A" anchored to ropes "B, D" on the lower side which act on one end of the crank "E" opposite the panel with respect to the pin "P", that motorized jacks act for an "S" stroke from position 1 to position 2, this movement performed when the sun is in the zenith position, for each day of the year.

Another characteristic is given by the fact that the movement of each row of double-sided photovoltaic panels is carried out with a single motorized jack "A" and a rope "B", the jack "A" pulls the rope "B" performing a stroke "S" from position a 1 to a position 2.

Another characteristic is given by the fact that for each photovoltaic module there are weights "C" each tied to a rope "R" and to a rope "D" which the rope "B", which acts as a motor rope, passes through a pulley " F" and is connected to a weight "K", that for each photovoltaic module there are weights "C" each tied to a rope "R" and to a rope "D".

Another characteristic is given by the fact that each rope "R" passes through a respective pulley "T" anchored at the other end to the rope "B" by means of a clamp "M" and that each rope "D" is instead anchored to the other end to the respective rotation crank "E" present for each photovoltaic module.

Another characteristic is given by the fact that in the absence of wind, when the jack is in position 1 the weight "C" is raised so that the rope D is loose and the double-sided photovoltaic module is stopped in its equilibrium position which forms an angle AM with the vertical and that when the jack is in position "2" the weights "C" descend, tensioning the ropes "D" which allow the rotation of the photovoltaic module so as to form an angle PM with the vertical.

Other features and advantages will appear clear from figures 1-9 given for explanatory and non-limiting purposes.

### Brief Description of the Figures

Fig.1 shows a series of bifacial photovoltaic solar panels compliant with those used in the present invention constrained (but free to rotate), on poles driven into the ground seen from the north west.
Fig. 2 shows a series of bifacial photovoltaic solar panels compliant with those used in the present invention constrained (but free to rotate), on poles driven into the ground seen from the north east.
Fig. 3 shows the front view from East or West of the photovoltaic field of bifacial photovoltaic panels compliant with those used in the present invention, the position of the barycentric axis of the bifacial photovoltaic panel lower than a minimum calculated height "X" is evident. from the constraint points of the same to the poles driven into the supporting ground.
Figure 4 and Figure 5 show the irradiation of the photovoltaic field of bifacial photovoltaic panels compliant with those used in the present invention, in an interval close to the zenith position at least one face of the bifacial photovoltaic panels is always maintained which captures the solar energy during the oscillations.
Figure 6 and Figure 7 show an optional device for increasing the irradiation of photovoltaic modules in the photovoltaic field of bifacial photovoltaic panels compliant with those used in the present invention.
Figure 8 and Figure 9 show a further optional device for increasing the irradiation of the photovoltaic modules in the photovoltaic field of bifacial photovoltaic panels compliant with those used in the present invention.

### Description of a preferred embodiment of the invention

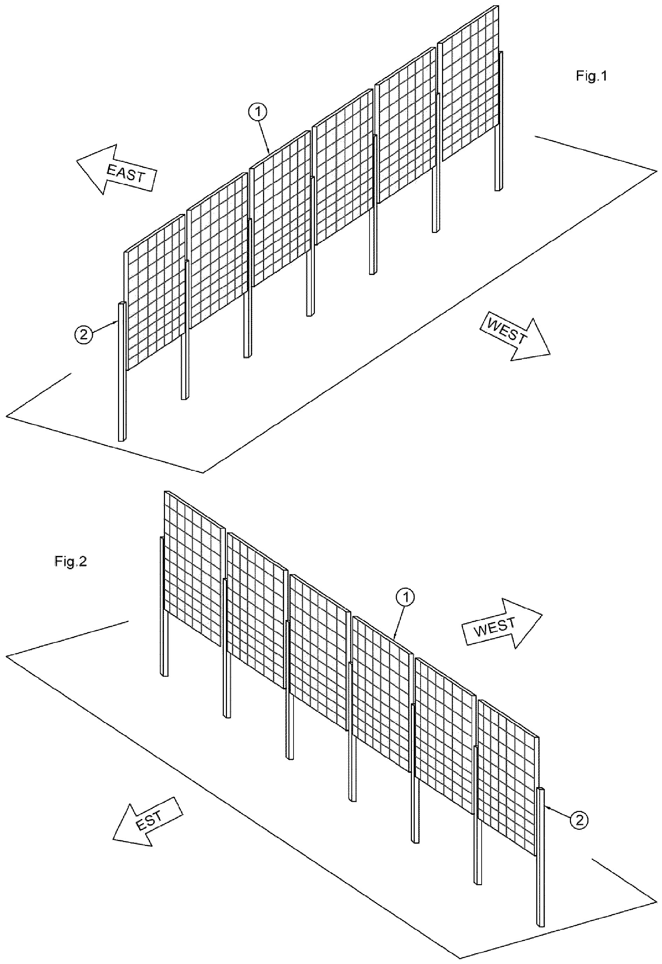

With reference to Fig.1 and Fig.2, a row of bifacial photovoltaic solar panels 1 is shown, i.e. having a double surface for collecting solar energy to transform it into electrical energy, having a surface 1A facing directly towards the solar radiation coming from EAST and a rear surface 1B on the surface opposite to surface 1A, which receives solar radiation coming from the WEST. The 1A solar surfaces receive the sun mostly in the morning before the Zenith while the B surfaces receive the sun mostly in the afternoon or after the Zenith.

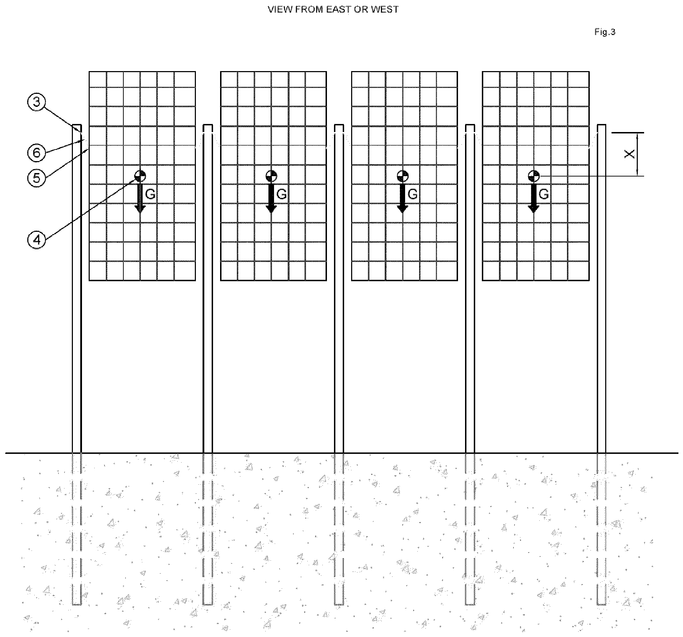

As indicated in Fig.3, the photovoltaic modules are anchored on the sides through lateral constraints 5 (e.g. adjustable chains, ropes or tie rods 6) fixed at point 3 on the poles driven into the ground, which allow rotation. The axis passing through the lateral constraints 5 is arranged at a small distance above the axis passing through the center of gravity of the panel. This system entails the particular advantage that it allows the reduction of wind forces as the resistant torque produced by the weight of the panel is reduced by the distance between the axis passing through the lateral constraints 5 and the axis passing through the center of gravity 4 of the double-sided photovoltaic panel , so as to allow very economical support structures. Furthermore, the oscillation of bifacial modules allows not to lose the collection near the zenith for half the oscillation period. The lateral constraints 5 are positioned on the sides of the photovoltaic panel at a small distance above the axis passing through the center of gravity 4, preferably but not exclusively at a distance between 5 cm and 60 cm so as to reduce the wind forces on the poles, to which the panels are constrained, these efforts are determined by the moment produced by the weight of the panel times the distance between the lateral constraints 5 and the axis passing through the center of gravity 4.

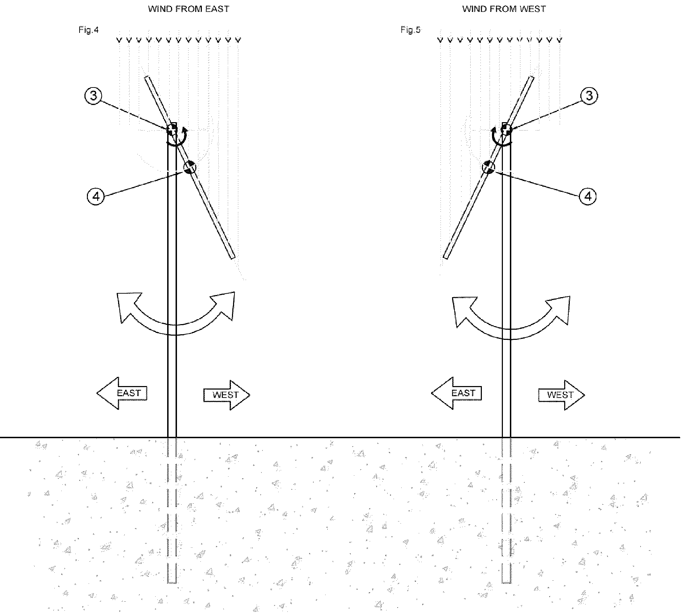

With reference to fig. 4, the wind coming from the East rotates the panels around the points 3 where the constraints 5 are present and exposes the panels to solar radiation. In the absence of sun, the panels with the weight of said panels applied to the center of gravity 4 return to the vertical position.

With reference to fig. 5, the wind coming from the West rotates the panels around the points 3 where the constraints 5 are present and exposes the panels to solar radiation. In the absence of wind, the panels with the weight of said panels applied to the center of gravity 4 return to the vertical position.

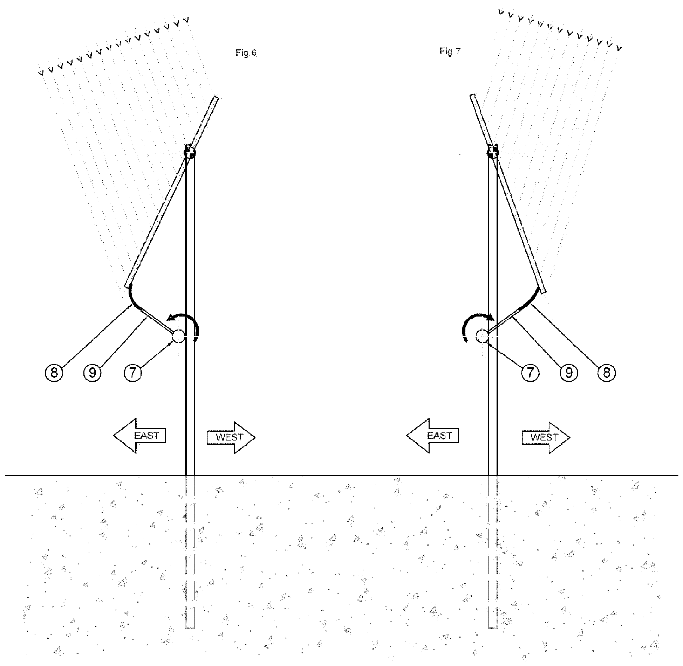

As shown in fig. 6 and 7, each row of the bifacial photovoltaic solar panel array has a motorized rotating shaft 7 located under the bottom side of the bifacial photovoltaic solar panels. Said motorized shaft 7 is equipped with rods 9 arranged perpendicular to it, each rod 9 is arranged under each double-sided photovoltaic solar panel, each rod 9 is equipped with an extension made of elastic material 8. The motorized rotating shaft 7 rotates the rods 9 very slowly so that they can tilt the photovoltaic solar panel to increase the collection of solar radiation. The direction of rotation of shaft 7 is counterclockwise before the zenith in the morning and clockwise after the zenith in the afternoon so that the double-sided photovoltaic panel increases the collection of solar energy. However, the device does not hinder the rotation of the panel in case of strong winds since the elastic part has a preestablished resistance.

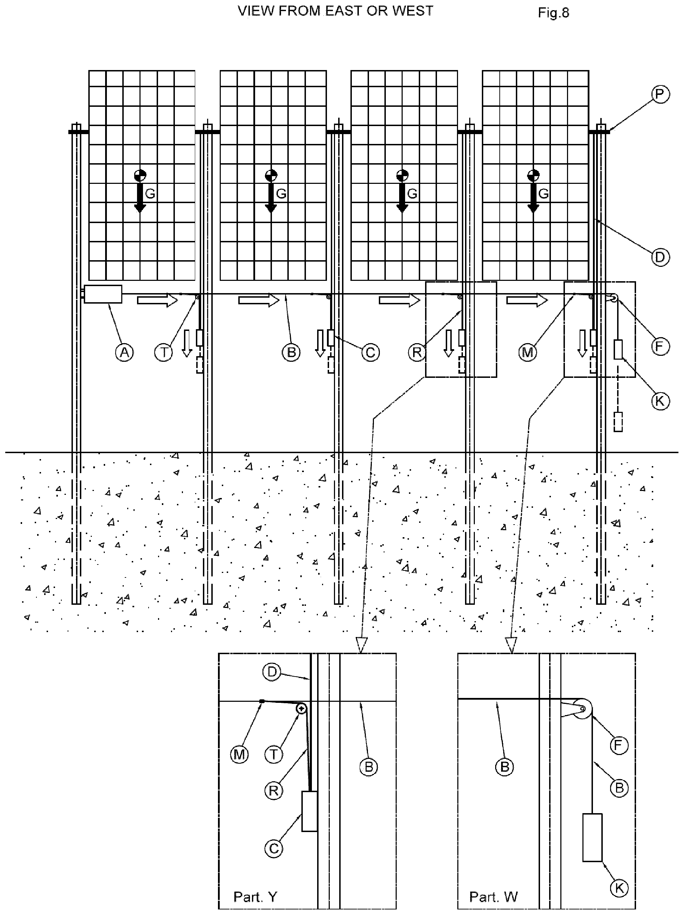

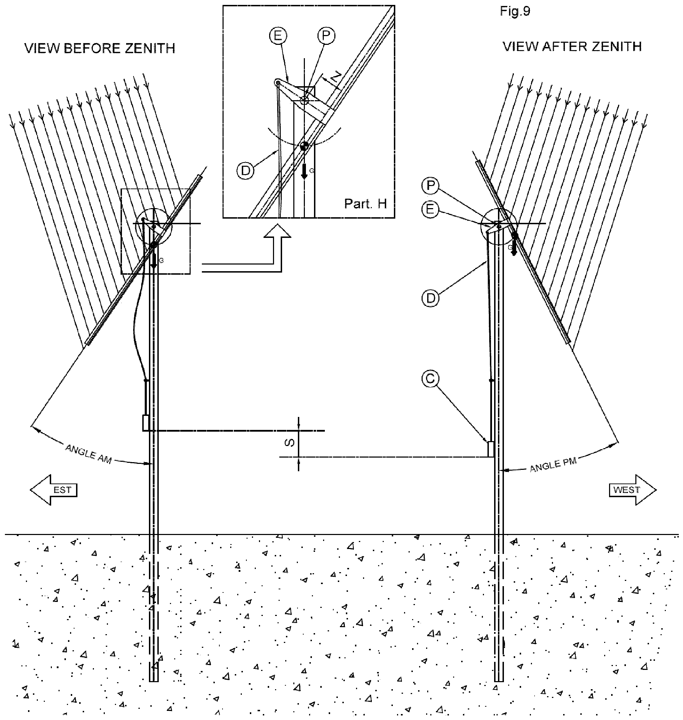

Figures 8 and 9 show a further embodiment of the field of bifacial photovoltaic panels to increase the collection of radiation on said bifacial photovoltaic panels, compliant with those used in the present invention. In this embodiment, the lateral constraint 5 is made with pins "P" integral with the support poles 3 of the photovoltaic modules. The double-sided photovoltaic panels 1 are connected to the support poles 3 by means of rotation cranks "E". The rotation cranks "E" are fixed to the sides of each double-sided photovoltaic panel at a certain distance above the axis passing through the center of gravity "G" of the panel. The rotation cranks "E" are mounted to rotate around the pins "P" integral with the support poles 3.

With reference to fig.9 part. H is achieved: bifacial photovoltaic panels are in equilibrium in the absence of wind when they form an "AM" angle with respect to the vertical. In this condition the bifacial photovoltaic panels find their equilibrium since the straight line that identifies the direction of the weight force passes through the fulcrum of the "P" pins. Each row of double-sided photovoltaic panels also has one or more motorized jacks "A" anchored to ropes "B, D" on the lower side which act on one end of the rotation crank "E" opposite the panel with respect to the pin "P". The motorized jacks act for an "S" stroke from position1 to position 2, this movement performed when the sun is in the zenith position, for every day of the year. To achieve this, a simple astronomical diverter is used to give the impulse to jack "A". This allows the rotation of the photovoltaic panel to capture more solar radiation in the afternoon. During the night the jack performs the opposite stroke from position 2 to position 1 so that the double-sided photovoltaic panels are ready to receive better solar radiation in the morning before the zenith. The movement system can be created with a single jack "A" and a rope "B". The rope "B", which acts as a motor rope, passes through the pulley "F" and is connected to the weight "K" (see fig. 8 part. W), to keep it under tension. For each photovoltaic module there are weights "C" each tied to a rope "R" and a rope "D". Each rope "R" passes through the respective pulley "T" (see fig. 8 part.Y) anchored at the other end to the rope "B" by means of a clamp "M". Each cable "D" is instead anchored at the other end to the respective rotation crank "E" present for each photovoltaic module. Jack "A" has two working positions "1" and "2". In position 1 lift the "K" weight and all the "C" weights. In position 2, lower all the "C" weights and the "K" weight. When the jack is in position 1, the weight "C" is raised so that the rope D is loose and the bifacial photovoltaic module is stationary (in the absence of wind) in its equilibrium position which forms an angle AM with the vertical. When the jack is in position "2" the weights "C" go down, tensioning the ropes "D" which allow the rotation of the photovoltaic module so as to form an angle PM with the vertical. The jack acts for a stroke "S" from position1 to position 2, this movement performed when the sun is in the zenith position, for every day of the year. To achieve this, a simple astronomical diverter is used to give the impulse to jack "A". This allows, as explained above, the rotation of the photovoltaic panel to capture more solar radiation in the afternoon.

During the night the jack performs the opposite stroke from position2 to position 1 so that the double-sided photovoltaic panels are ready to receive better solar radiation in the morning before the zenith. The movement system can be created with a single jack "A" and a rope "B". The rope "B", which acts as a motor rope, passes through the pulley "F" and is connected to the weight "K" (see fig. 8 part. W), to keep it under tension. For each photovoltaic module there are weights "C" each tied to a rope "R" and a rope "D". Each rope "R" passes through the respective pulley "T" (see fig. 8 part. Y) anchored at the other end to the rope "B" by means of a clamp "M". Each cable "D" is instead anchored at the other end to the respective rotation crank "E" present for each photovoltaic module. Jack "A" has 2 working positions "1" and "2". In position 1 lift the "K" weight and all the "C" weights. In position 2, lower all the "C" weights and the "K" weight. When the jack is in position 1, the weight "C" is raised so that the rope D is loose and the bifacial photovoltaic module is stationary (in the absence of wind) in its equilibrium position which forms an angle AM with the vertical. When the jack is in position "2" the weights "C" go down, tensioning the ropes "D" which allow the rotation of the photovoltaic module so as to form an angle PM with the vertical. The jack acts for a stroke "S" from position1 to position 2, this movement performed when the sun is in the zenith position, for every day of the year. To achieve this, a simple astronomical diverter is used to give the impulse to jack "A". This allows, as explained above, the rotation of the photovoltaic panel to capture more solar radiation in the afternoon. During the night the jack performs the opposite stroke from position 2 to position 1 so that the double-sided photovoltaic panels are ready to receive better solar radiation in the morning before the zenith. Furthermore, the device does not hinder the independent rotation of the photovoltaic modules in case of wind, in fact if the wind arrives from the WEST each rope "D" loosens independently and the module rotates free, if the wind arrives from the EAST direction they will rise (in independently for each module) the weights "C" towed by the rope D and since the weights "C" have mass they do not prevent rotation even with a minimum wind force, in this last case the ropes "R" loosen independently.

This photovoltaic field system of double-sided photovoltaic panels allows it to be integrated into agricultural land given that being arranged vertically it allows considerable space for the passage of agricultural machinery used for processing between one row and the next and furthermore, being devoid of significant movement, it can be intended for grazing without danger to the animals.

The invention, of course, is not limited to the described embodiment but can receive improvements and modifications by the man of the trade without departing from the framework of the patent.

The present invention allows numerous advantages and overcomes difficulties that could not be overcome with the systems currently on the market.

## Claims

1. Field of bifacial photovoltaic solar panels comprising rows of bifacial photovoltaic panels arranged in rows arranged in a NORTH SOUTH direction so that the bifacial photovoltaic panels are each equipped with two surfaces for collecting solar radiation, such surfaces belonging to an ideal plane perpendicular to the ground almost parallel to the North South meridian axis so that one surface of the double-sided photovoltaic panel looks almost to the east at the rising of the sun and the other surface of the double-sided photovoltaic panel opposite to the first, looks almost to the west at the setting of the sun **characterized in that** each row of bifacial photovoltaic panels includes poles fixed in the ground and panels arranged between one pole and another, each bifacial photovoltaic panel is attached on one side to a pole and on the other side to the next pole with lateral constraints 5 which allow the rotation and that the axis passing through the lateral constraints 5 is arranged at a certain distance above the axis passing through the center of gravity 4 of the panel.

2. Field of bifacial photovoltaic solar panels according to claim 1 **characterized in that** the distance between the axis passing through the lateral constraints 5 and the axis passing through the center of gravity 4 of the panel is between 5 cm and 60 cm.

3. Field of double-sided photovoltaic solar panels according to claim 1 or 2 **characterized in that** the driven poles are those typically used for traditional vineyards: for example, made of vibrated and reinforced pre-stressed concrete, iron, wood.

4. Field of bifacial photovoltaic solar panels according to claim 1 or 2 or 3 **characterized in that** each row of the field of bifacial photovoltaic solar panels presents a device consisting of a motorized rotating shaft 7 located under the lower side of the bifacial photovoltaic solar panels, that said motorized shaft 7 is equipped with rods 9 arranged perpendicular to it, that each rod 9 is arranged under each double-sided photovoltaic solar panel and that each rod 9 is equipped with an extension made of elastic material 8.

5. Field of bifacial photovoltaic solar panels according to claim 4 **characterized in that** the direction of rotation of the shaft 7 is counterclockwise before the zenith in the morning and clockwise after the zenith in the afternoon so that the bifacial photovoltaic panel increases the energy collection solar.

6. Field of bifacial photovoltaic solar panels according to claim 1 or 2 or 3 **characterized in that** the lateral constraint 5 is made with pins "P" integral with the support poles 3 of the photovoltaic modules, that bifacial photovoltaic panels 1 are connected to the poles of support 3 by means of rotation cranks "E", that the rotation cranks "E" are fixed to the sides of each double-sided photovoltaic panel at a certain distance above the axis passing through the center of gravity "G" of the panel, that the rotation cranks "E" are mounted to rotate around the pins "P" integral with the support poles 3, each row of double-sided photovoltaic panels also has one or more motorized jacks "A" anchored to cables "B, D" on the lower side which act on one end of the rotation crank "E" opposite the panel with respect to the pin "P", that the motorized jacks act for a stroke "S" from a position 1 to a position 2, this movement performed when the sun is in the zenith position, for each day of the year.

7. Field of bifacial photovoltaic solar panels according to claim 6 **characterized in that** the movement of each row of bifacial photovoltaic panels is achieved with a single motorized jack "A" and a rope "B", the jack "A" pulls the rope "B" by performing an "S" stroke from position 1 to position 2.

8. Field of bifacial photovoltaic solar panels according to claim 7 **characterized in that** for each photovoltaic module there are weights "C" each tied to a rope "R" and to a rope "D", that the rope "B", which It acts as a motor rope, passes through a pulley "F" and is connected to a weight "K".

9. Field of bifacial photovoltaic solar panels according to claim 8 **characterized in that** each rope "R" passes through a respective pulley "T" anchored at the other end to the rope "B" by means of a clamp "M" and that each rope D" instead is anchored at the other end to the respective crank "E" present for each photovoltaic module.

10. Field of bifacial photovoltaic solar panels according to claim 7, 8 or **characterized in that** in the absence of wind, when the jack is in position 1 the weight "C" is raised so that the rope D is loose and the module double-sided photovoltaic system is stopped in its equilibrium position which forms an angle AM with the vertical and when the jack is in position "2" the weights "C" descend, tensioning the ropes "D" which allow the rotation of the photovoltaic module so as to form an angle PM with the vertical.
